# EUROPÄISCHE PATENTANMELDUNG

(11) **EP 0 820 891 A2**
(43) Veröffentlichungstag der Anmeldung: **28.01.1998**
(21) Anmeldenummer: 96113064.8
(22) Anmeldetag: 14.08.1996
(51) Int. Cl.: B60J 10/08, B05B 15/04

(54) **Schaumstoffstreifen und Applikator zum Anbringen des Schaumstoffstreifens im Spalt, insbesondere zwischen zwei Karosserieteilen eines Fahrzeuges**

(30) Priorität: 24.07.1996 DE 29612759 U; 06.08.1996 DE 29613594 U
(71) Anmelder: VOSSCHEMIE GmbH, D-25436 Uetersen (DE)
(72) Erfinder: Voss, Klaus-Wilhelm, 25436 Uetersen (DE)
(74) Vertreter: Richter, Werdermann & Gerbaulet

(57) **Zusammenfassung**

Die vorliegende Erfindung betrifft einen Schaumstoffstreifen (100,200,300,400), dessen Oberfläche teilweise mit einer Klebeschicht (10) versehen ist. Der Querschnitt der erfindungsgemäßen Schaumstoffstreifen setzt sich erfindungsgemäß aus folgendem zusammen: einem ersten, insbesondere gleichschenkligen Trapez (12) mit einer ersten Höhe (14) und einer ersten langen und einer ersten kurzen Grundlinie (16,18), einem Rechteck (20) mit langen und kurzen Seiten (22,24,26), wobei eine erste lange Seite des Rechteckes (22) bündig mit der ersten langen Grundlinie (16) des ersten Trapezes (12) abschließt, und einem zweiten, insbesondere gleichschenkligen Trapez (28) mit einer zweiten Höhe (30) und einer zweiten langen und einer zweiten kurzen Grundlinie (32,34), wobei die zweite lange Grundlinie (32) des zweiten Trapezes (28) bündig mit einer zweiten langen Seite (24) des Rechteckes abschließt.

## Beschreibung

Die Erfindung betrifft einen Schaumstoffstreifen, dessen Oberfläche teilweise mit einer Klebeschicht versehen ist, sowie eine Anordnung derartiger Schaumstoffstreifen, sowie einen Applikator zum Anbringen des Schaumstoffstreifens im Spalt, insbesondere zwischen zwei Karosserieteilen eines Fahrzeuges.

Es ist bekannt, derartige Schaumstoffstreifen als Abdichtstreifen für Spalte, insbesondere beim Lackieren von Kraftfahrzeugteilen, zu verwenden. Diese sind üblicherweise zylindrisch ausgebildet, d.h. deren Querschnittsfläche ist kreisförmig oder ellipsenförmig. Bei diesem Profil hat es sich jedoch als nachteilig gezeigt, daß die erforderlichen Klebeflächen beim Anbringen des Profils zur Spaltabdichtung nicht mehr in ihrem vollen Querschnitt als Klebeflächen zur Verfügung stehen, denn bei einem zylindrischen Rundprofil unter Verwendung eines sich selbst ablösenden Klebers werden die Klebeflächen, die die Haftflächen vorgeben, derart reduziert, daß die volle Klebefläche nicht mehr zur Verfügung steht, was durch das zylindrische Rundprofil bedingt ist.

Es ist ferner zu berücksichtigen, daß letztlich zur Spaltabdichtung das Schaumstoffprofil in den Spalt eingedrückt werden muß, um den Spaltverschluß zu erreichen. Da aber ein einem Druck ausgesetztes Schaumstoffprofil das Bestreben hat, sich wieder zurückzustellen, d.h. die Ausgangsform anzunehmen, führt dieser Umstand dazu, daß keine für eine sichere Fixierung des Streifens ausreichende, mit Kleber ausgestattete plane Fläche zur Anlage kommt.

Darüber hinaus paßt sich das Rundprofil nach dem Eindrücken in einen Spalt nicht allen Spaltbreiten ideal an.

Es ist daher Aufgabe der Erfindung, einen Schaumstoffstreifen der oben genannten Art nicht nur zur Abdichtung von Spalten zwischen Karosserie und Türen bzw. Klappen von Fahrzeugen, sondern auch für sogenannte "Bei"-Lackierungen von Karosserieteilen zur Verfügung zu stellen, der bei einfachem Aufbau eine möglichst gute Ausnutzung der aufgebrachten Klebeschicht ermöglicht. Des weiteren ist es Aufgabe, einen Applikator zu schaffen, mit dem Schaumstoffstreifen im Spalt, insbesondere zwischen zwei Karosserieteilen eines Fahrzeuges, mühelos angebracht werden können.

Diese Aufgabe wird bei einem Schaumstoffstreifen der obengenannten Art durch die im Patentanspruch 1 gekennzeichneten Merkmale, durch eine im Anspruch 15 gekennzeichnete Verwendung, und bei einer Anordnung der obengenannten Art durch die im Patentanspruch 16 gekennzeichneten Merkmale gelöst.

Dazu ist es erfindungsgemäß vorgesehen, daß der Schaumstoffstreifen einen Querschnitt aufweist, der sich nacheinander aus folgendem zusammensetzt,
einem ersten, insbesondere gleichschenkligen Trapez mit einer ersten Höhe und einer ersten langen und einer ersten kurzen Grundlinie,
einem Rechteck mit langen und kurzen Seiten, wobei eine erste lange Seite des Rechteckes bündig mit der ersten langen Seite des ersten Trapezes abschließt, und
einem zweiten, insbesondere gleichschenkligen Trapez mit einer zweiten Höhe und einer zweiten langen und einer zweiten kurzen Grundlinie, wobei die zweite lange Grundlinie des zweiten Trapezes bündig mit einer zweiten langen Seite des Rechteckes abschließt.

Dies hat den Vorteil, daß die vorgegebene Haftfläche in ganzer Größe bestehen bleibt, so daß eine große Haftfläche zur Verfügung steht. Ferner zeigt dieses Profil mit seinem stärker verformbaren schmalen Querschnitt oben und der geometrisch breiteren Basis, die auch den Kleber trägt, ein ideales Verformungs- und Anpassungs- und Klebeverhalten an unterschiedliche Spaltdicken.

Eine besonders große, konstante Haftfläche wird dadurch erzielt, daß die Klebeschicht die erste kurze Grundlinie vollständig bedeckt.

Ein derartiger Schaumstoffstreifen wird in besonders vorteilhafter Weise zur Spaltabdichtung bzw. als Abdichtungselement, insbesondere zur Abdichtung von Spalten bzw. Fugen zwischen einem feststehenden Karosserieteil und einem beweglichen Karosserieteil von Kraftfahrzeugen verwendet.

Bei einer Anordnung von derartigen Schaumstoffstreifen ist es vorgesehen, daß wenigstens zwei Schaumstoffstreifen derart zueinander ausgerichtet sind, daß jeweils zwei kurze Seiten der Rechtecke der jeweiligen Schaumstoffstreifen zueinander fluchtend ausgerichtet sind, wobe die Schaumstoffstreifen an diesen Stoßstellen über eine Sollreißbrücke miteinander zu einer Kette verbunden sind.

Um einen Schaumstoffstreifen in dem Spalt, z.B. zwischen der Karosserie eines Fahrzeuges und dessen Tür, anbringen zu können, sieht die Erfindung einen Applikator vor, der aus einer stabförmigen Handhabe besteht, deren eines freies Ende eine klaufenförmige Halterung trägt, die von zwei Klauenschenkeln gebildet wird, die den Schaumstoffstreifen unter Aussparung seiner Klebefläche umgreifen und halten.

Die speziell ausgestalteten Schaumstoffstreifen sind auch bei der Durchführung von "Bei"-Lackierungen von Karosserieteilen verwendbar. Wenn bei einer Reparatur nur eine kleine Fläche repariert werden soll, so wird der Schaumstoffstreifen als Endteil einer abgeklebten Fläche benutzt. Es ist dann möglich, eine Kantenbildung zu verhindern. Eine solche "Bei"-Lackierung ohne Kantenbildung und ohne den Einsatz dieses Schaumstoffstreifens erfordert ein hohes Können beim Hantieren mit der Lack-Sprühpistole. Beim Einsatz des Schaumstoffstreifens ist eine derartige "Bei"-Lackierung mühelos und auch durch ungelernte Arbeitskräfte möglich. Der besondere Vorteil dabei beseteht darin, daß die Klebefläche der erfindungsgemäßen Schaumstoffstreifen um ein Mehrfaches breiter auf der Karosseriefläche gegenüber einem bekannten zylindrischen Schaumstoffstreifen mit einem kreisförmigen Querschnitt aufliegt. Die entstehende schmale Zone bei diesen "Bei"-Lackierungen, in der der Farbnebel als winzige Tröpfchen auftritt und sie daher etwas blind macht, wird durch Polieren egalisiert, so daß ein nicht sichtbarer Übergang vom alten zum neuen Lack entsteht.

Da bei einem runden Profil des bekannten zylindrischen Schaumstoffstreifens die Klebefläche bereits kurze Zeit nach dem Aufbringen und Anpressen, bei dem der Schaumstoffstreifen etwas oval wird, sich deutlich reduziert, denn der Klebstoff ist immer ein selbstablösender Klebstoff und das runde Profil will wieder in den runden Zustand zurück, führt dazu, daß sich die etwa 2 oder 3 mm breite Klebstofffläche durch den Wiederablöseeffekt durch die Kraft des runden Profiles wieder erheblich verkleinert. Beim "Bei"-Lackieren entsteht aber ein Luftdruck durch die Sprühpistole, so daß die Gefahr besteht, daß während des Lackierprozesses sich der Streifen vom Untergrund löst, was auf jeden Fall verhindert werden muß, weil es zu einem fast nicht zu reparierenden Schaden führt.

Besonders vorteilhaft ist zur Vermeidung dieses Nachteils die gerade Klebefläche beim erfindungsgemäßen Schaumstoffstreifen. Somit ist die Abreiß- und Kontaktbrücke, also die überstehenden 4,2 bzw. 5,5 mm, auch ideal zur Abgrenzung gegen Farbnebel ohne Kantenbildung.

Weitere vorteilhafte Ausgestaltungen sind in den Unteransprüchen gekennzeichnet.

Nachstehend wird die Erfindung anhand von Zeichnungen näher erläutert. Es zeigen
Fig. 1 eine Prinzipdarstellung des Querschnitts eines symmetrischen Schaumstoffstreifens,
Fig. 2 eine Schnittansicht einer ersten bevorzugten Ausführungsform eines symmetrischen Schaumstoffstreifens,
Fig. 3 eine Schnittansicht einer Anordnung von Schaumstoffstreifen gemäß der ersten Ausführungsform von Fig.2,
Fig. 4 eine Schnittansicht einer zweiten bevorzugten Ausführungsform eines symmetrischen Schaumstoffstreifens,
Fig. 5 eine Schnittansicht einer Anordnung von Schaumstoffstreifen gemäß der zweiten Ausführungsform von Fig.4,
Fig. 6 eine Schnittansicht der Verwendung eines Schaumstoffstreifens gemäß der ersten Ausführungsform von Fig.2 zur Spaltabdichtung,
Fig. 7 eine Schnittansicht der Verwendung eines Schaumstoffstreifens gemäß der zweiten Ausführungsform von Fig.4 zur Spaltabdichtung,
Fig. 8A eine Schnittansicht einer dritten Ausführungsform eines symmetrischen Schaumstoffstreifens,
Fig. 8B eine Schnittansicht einer vierten Ausführungsform eines symmetrischen Schaumstoffstreifens,
Fig. 9A eine Schnittansicht einer Anordnung von Schaumstoffstreifen gemäß der dritten Ausführungsform von Fig. 8A,
Fig. 9B eine Schnittansicht einer Anordnung von symmetrischen Schaumstoffstreifen gemäß der vierten Ausführungsform von Fig. 8B,
Fig. 10 eine Schnittansicht einer fünften Ausführungsform eines symmetrischen Schaumstoffstreifens,
Fig. 11 eine Schnittansicht einer Anordnung von asymmetrischen Schaumstoffstreifen gemäß der fünften Ausführungsform von Fig. 10,
Fig. 12 eine Schnittansicht der Verwendung eines Schaumstoffstreifens gemäß der fünften Ausführungsform von Fig.10 zur Spaltabdichtung,
Fig. 13 eine Schnittansicht der Verwendung symmetrischer Schaumstoffstreifen mit unterschiedlichen Profilabmessungen und eines asymmetrischen Schaumstoffstreifens zur Spaltabdichtung,
Fig. 14 einen senkrechten Schnitt eines Applikators mit einem von diesem erfaßten asymmetrischen Schaumstoffstreifen,
Fig. 15 einen senkrechten Schnitt durch einen Applikator für asymmetrische Schaumstoffstreifen mit Türspaltbreiten-Anpassung und
Fig. 16 in einer Seitenansicht die Anwendung des Schaumstoffstreifens bei einer "Bei"-Lackierung.

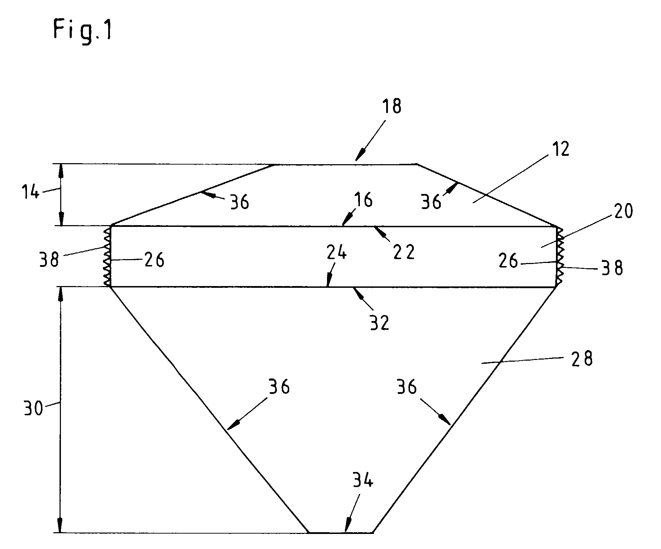

Fig. 1 zeigt skizzenartig die prinzipielle Zusammensetzung der Querschnittsfläche eines symmetrischen Schaumstoffstreifens 100,200,300,400. Bei Betrachtung von in der Fig. 1 oben nach unten, setzt sich die Querschnittsfläche aus folgendem zusammen:

Ein erstes gleichschenkliges Trapez 12 bildet einen oberen Abschnitt. Dieses Trapez 12 umfaßt eine erste kurze Grundlinie 18, eine erste lange Grundlinie 16 und nichtparallele Seiten 36.

An der ersten langen Grundlinie 16 schließt sich ein Rechteck 20 an mit einer ersten langen Seite 22, einer zweiten langen Seite 24 und kurzen Seiten 26. Die erste lange Seite 22 schließt bündig mit der ersten langen Grundlinie 16 ab.

An der zweiten langen Seite 24 des Rechteckes 20 schließt sich ein zweites Trapez 28 an. Dieses zweite Trapez umfaßt eine zweite lange Grundlinie 32, eine zweite kurze Grundlinie 34 und nichtparallele Seiten 36. Die zweite lange Grundlinie 32 schließt bündig mit der zweiten langen Seite 24 des Rechteckes 20 ab.

An den kurzen Seiten 26 des Rechteckes 20 sind die Überreste von Sollreißbrücken 38 erkennbar. Diese resultieren aus Anordnungen derartiger Schaumstoffstreifen, welche später beschrieben werden.

Die Trapeze 12 und 28 weisen jeweils eine Höhe 14 und 30 auf. Die Wahl dieser Höhe bestimmt im wesentlichen das Aussehen und die Art des Querschnitts des erfindungsgemässen Schaumstoffstreifens 100,200,300,400.

Die Höhe 14 ist gegenüber der Höhe 30 kleiner oder gleich bemessen, wobei z.B. die Höhe 14 1,15 mm bis 2 mm, insbesondere 1,5 mm oder 2 mm beträgt, wobei die Höhe 30 10,5 mm bis 20 mm, insbesondere 10,5 mm, 13 mm oder 20 mm beträgt, zumal die Schaumstoffstreifen bis zu einer Gesamthöhe von 23 mm und auch mehr hergestellt sein können. Die Länge der kurzen Seiten 26 des Rechtecks 20 des Schaumstoffstreifens kann dabei 1 mm bis 5 mm, insbesondere 2 mm, betragen. Die Länge der kurzen Grundlinie 18 liegt bei 1 mm bis 10 mm, insbesondere 6 mm, wobei die Länge der langen Grundlinie 16 2 mm bis 20 mm, insbesondere 17 mm oder 14 mm oder 28 mm betragen kann. Die Länge der kurzen Grundlinie 34 beträgt 1 mm bis 5 mm, insbesondere 3 mm. Das Verhältnis der Höhe 14 zu der Höhe 30 beträgt bevorzugterweise 0,1 bis 0,5 mm, insbesondere 0,11 oder 0,12 mm.

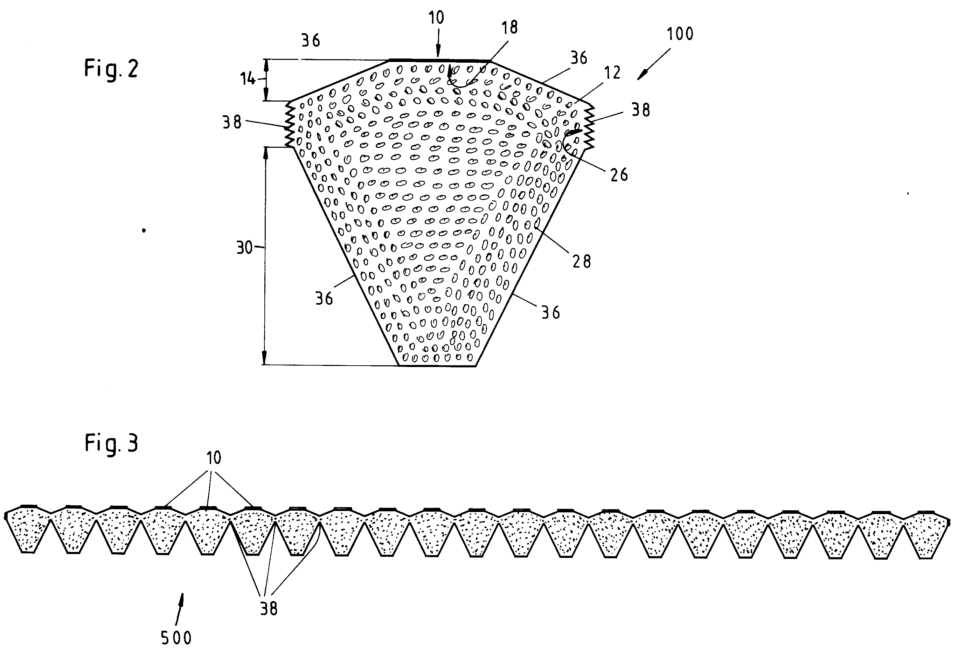

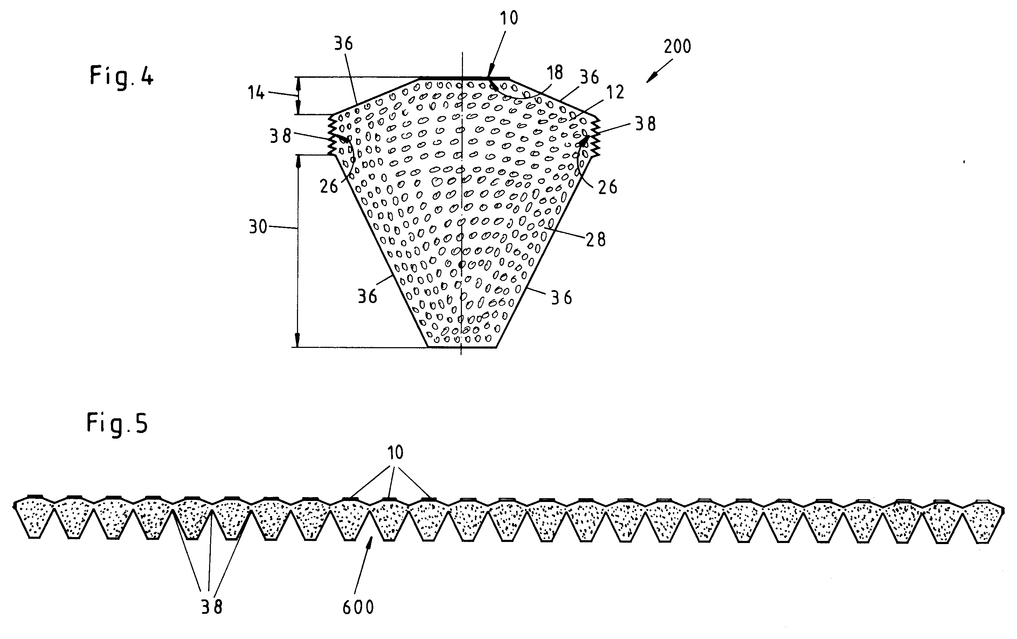

Diese oben schematisch aufgezeigten Bestandteile des Querschnittes eines symmetrischen Schaumstoffstreifens führen zu einem in den Fig. 2 und 4 dargestellten Querschnitt. Die erste kurze Seite 18 ist dabei von einer Klebstoffschicht 10 bedeckt.

Die Beschichtung der Grundfläche 18 des trapezförmigen Schaumstofformkörpers mit einem Klebstoff kann sich nur auf die gesamte Grundfläche 18 erstrecken, die normalerweise in 6 mm Breite mit dem Klebstoff beschichtet ist. Diese Beschichtung kann auch auf 2 mm bis 3 mm reduziert werden. Der Klebstoffauftrag kann sich auch über die Grundfläche 18 bis in die sich an die Grundfläche 18 angrenzende Fläche 36 erstrecken.

Die beiden Ausführungsbeispiele 100 und 200 der Fig. 2 und 4 unterscheiden sich im wesentlichen durch die Ausgestaltungen der Abmessungen der Trapeze 12 und 28.

In der in Fig. 2 dargestellten Ausführungsform 100 sind die Höhen 14 und 30 des ersten und zweiten Trapezes 12 und 28 größer als in der zweiten in der Fig. 4 dargestellten Ausführungsform 200. Ferner sind in der ersten Ausführungsform 100 die Längen der ersten und zweiten langen Grundlinien 16 und 32 (Fig.1) größer als in der zweiten Ausführungsform 200.

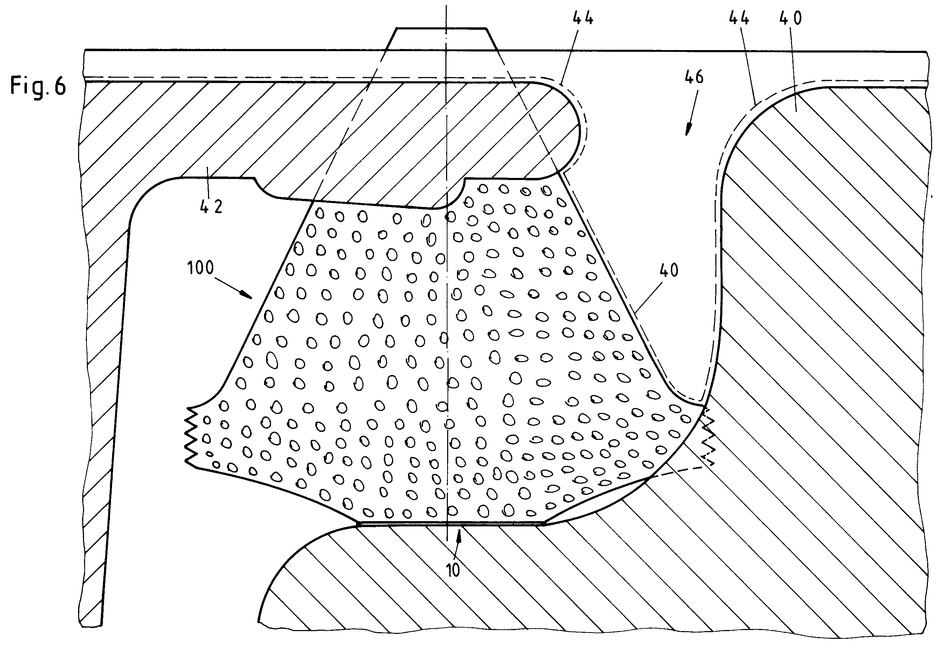

Fig. 3 und 5 zeigen Anordnungen 500,600 der ersten und zweiten Ausführungsform 100,200 in langen Ketten. Die Schaumstoffstreifen 100,200 stoßen dabei mit den kurzen Seiten ihrer Rechtecke 20 (Fig.1) aneinander, wobei an diesen Stoßstellen Sollreißbrücken 38 vorgesehen sind. Bei der Verwendung der erfindungsgemäßen Schaumstoffstreifen bei der Spaltabdichtung von beispielsweise Karosserie und Tür eines Kraftfahrzeuges werden diese Schaumstoffstreifen in Form solcher Ketten zur Verfügung gestellt. Bei Bedarf werden dann sukzessive Schaumstoffstreifen an den Sollreißbrücken 38 abgerissen und in einem Spalt plaziert.

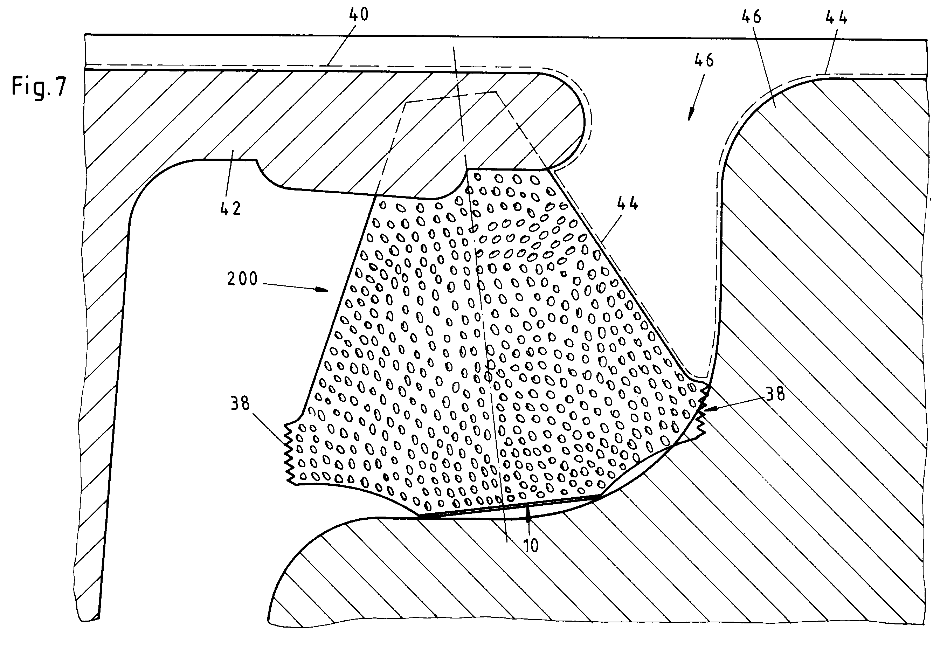

Die Anordnung bzw. Plazierung der erfindungsgemäßen Schaumstoffstreifen 100,200 in einem Spalt 46 ist in den Fig. 6 und 7 jeweils mit der ersten 100 bzw. zweiten Ausführungsform 200 dargestellt. Ein Spalt 46 zwischen einer Tür 42 und einer Karosserie 40 wird mittels eines eingesetzten Schaumstoffstreifens 100,200 abgedichtet, so daß beim Lackieren von Karosserie 40 und Tür 42 kein Lack in den Spalt eindringen kann.

Der Schaumstoffstreifen 100,200 wird mit seinem Klebestreifen 10 an der Karosserie fixiert. Durch Schließen der Tür bzw. Hineindrücken des Schaumstoffstreifens in den Spalt 46 wird ersterer zusammengedrückt und kommt in feste Anlage zu Karosserie 40 und Tür 42. Dies dichtet den Spalt 46 ab. Beim anschließenden Lackieren lagert sich der Lack 44 nicht nur auf Karosserie 40 und Tür 42, sondern in der in Fig. 6 und 7 dargestellten Weise auch auf dem Schaumstoffstreifen 100,200 ab. So ist ein Eindringen von Lack 44 in den Spalt 46 verhindert.

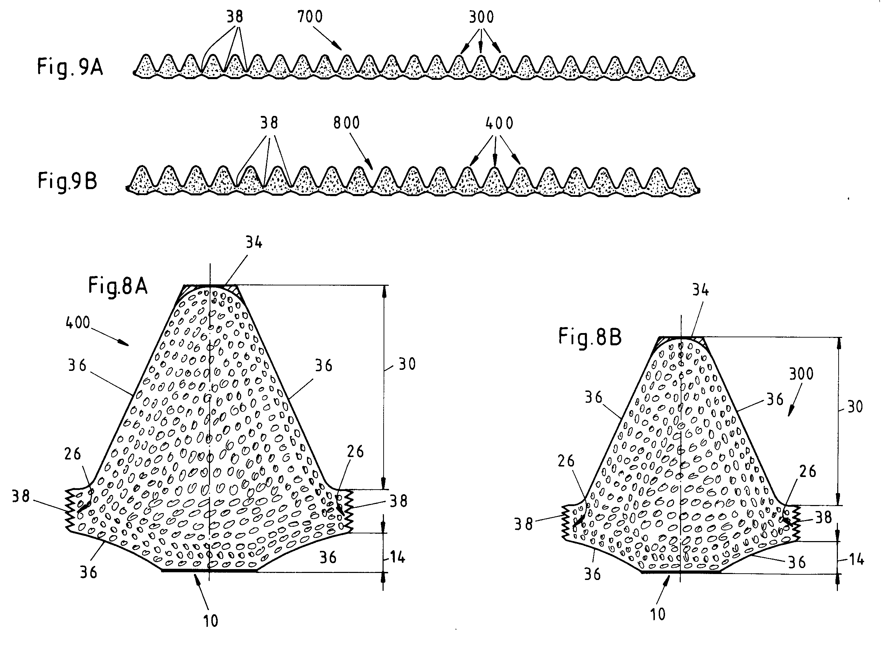

Fig. 8A und 8B zeigen jeweils eine dritte und vierte Ausführungsform 300,400 eines erfindungsgemäßen Schaumstoffstreifens. Diese entsprechen im wesentlichen in ihren Abmessungen jeweils der ersten und zweiten Ausführungsform 100 und 200 mit dem Unterschied, daß die nichtparallelen Seiten 36 nicht gerade, sondern gekrümmt ausgeführt sind. Ferner ist die zweite kurze Grundlinie 34 ebenfalls abgerundet.

Die Fig. 9A und 9B zeigen jeweils kettenartige Anordnungen von Schaumstoffstreifen gemäß der dritten und vierten Ausführungsform 300 und 400 analog zu Fig. 3 und 5. Wiederum stoßen die einzelnen Schaumstoffstreifen 300, 400 an den jeweiligen kurzen Seiten 26 des Rechteckes 20 (vgl. Fig.1) aneinander.

Aufgrund der verschiedenen Abmessungen der Schaumstoffstreifen 300 und 400 entspricht in Fig. 9A eine Kettenlänge von 350mm 25 Schaumstoffprofilen 300 und in Fig. 9B eine Kettenlänge von 357mm 21 Schaumstoffprofilen 400.

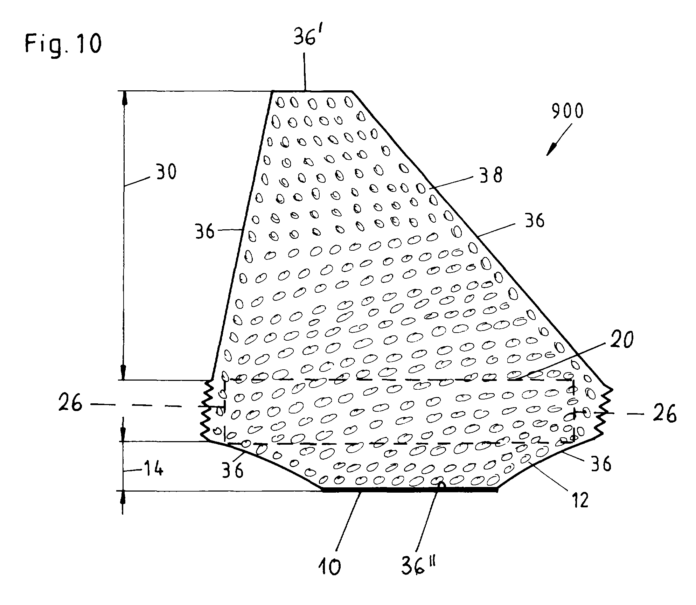

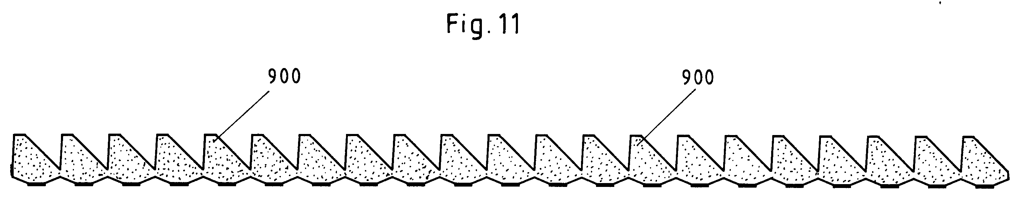

Es ist klar, daß die Trapeze 12 und 28 nicht notwendigerweise gleichschenklig sein müssen. Auch asymmetrische Trapeze 12 und 28 sind möglich, beispielsweise zur Anpassung an spezielle abzudichtende Spalte. Ein derartiges asymmetrisches Profil 900 ist in den Fig. 10 und 11 dargestellt.

Fig. 11 zeigt eine kettenartige Anordnung von asymmetrischen Schaumstoffstreifen 900. Auch hier stoßen die einzelnen Schaumstoffstreifen 900 an den jeweiligen kurzen Seiten 26 des Rechteckes 20 aneinander (Fig.10).

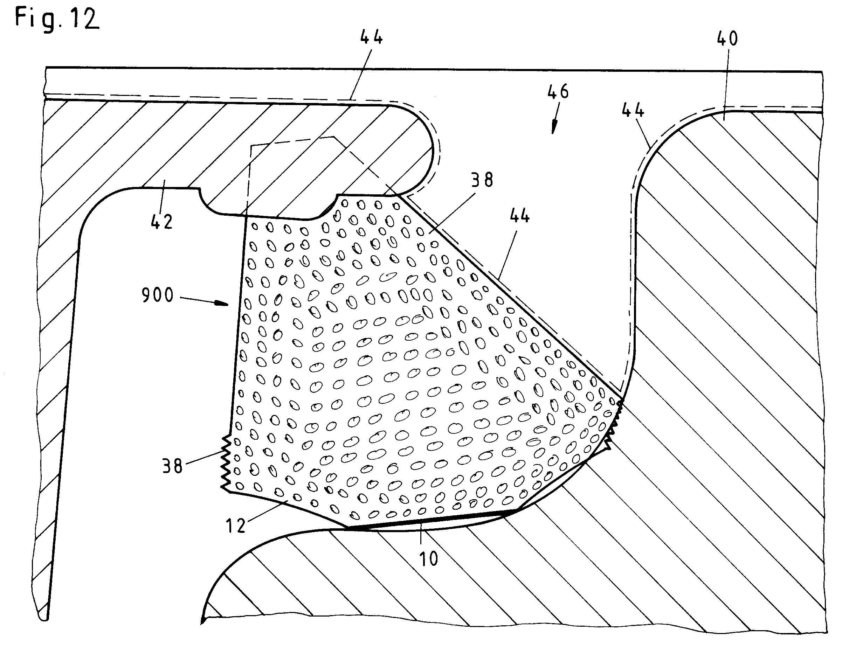

Fig. 12 illustriert die Anordnung des Schaumstoffstreifens 900 in einem Spalt 46 analog den Fig.6 und 7.

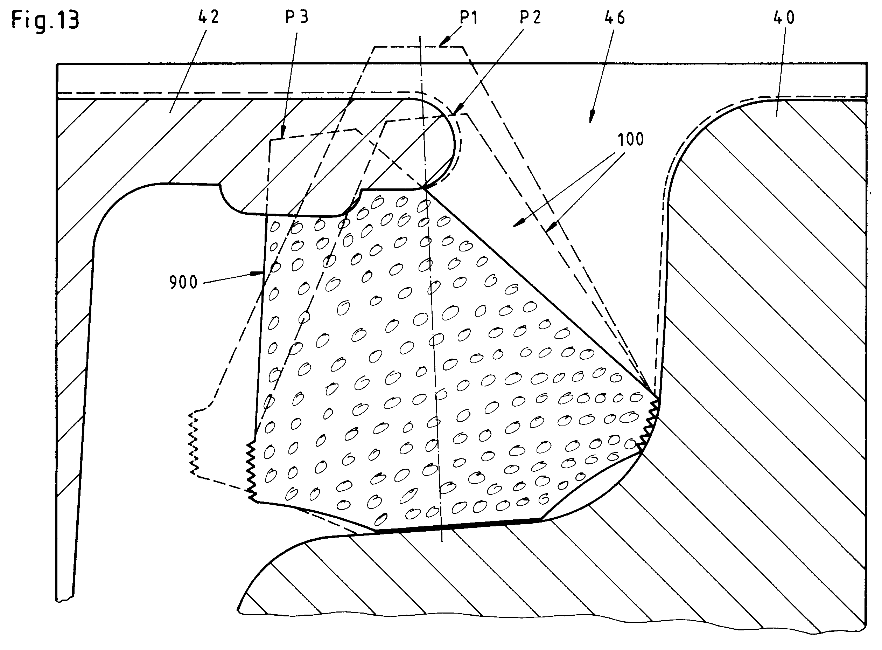

Fig. 13 zeigt die Verwendung von symmetrisch ausgebildeten Schaumstoffstreifen 100,200,300,400 mit unterschiedlichen Profilabmessungen und eines asymmetrischen Schaumstoffstreifens 900 zur Abdichtung eines Spaltes 46 zwischen der Karosserie 40 eines Fahrzeuges und dessen Tür 42. Bei P1 handelt es sich um das Profil eines symmetrischen Schaumstoffstreifens 100, z.B. mit einer Seitenkantenlänge von 17 mm, bei P2 um das Profil eines symmetrischen Schaumstoffstreifens 100, z.B. mit einer Seitenkantenlänge von 14 mm und bei P3 um das Profil eines asymmetrischen Schaumstoffstreifens 900 mit einer Länge von z.B. 14 mm im Bereich der längsten Seitenkante der beiden Seitenkanten des Profils. Die Breite des Spaltes 46 beträgt in etwa 7 mm bei dem in Fig.13 dargestellten Ausführungsbeispiel.

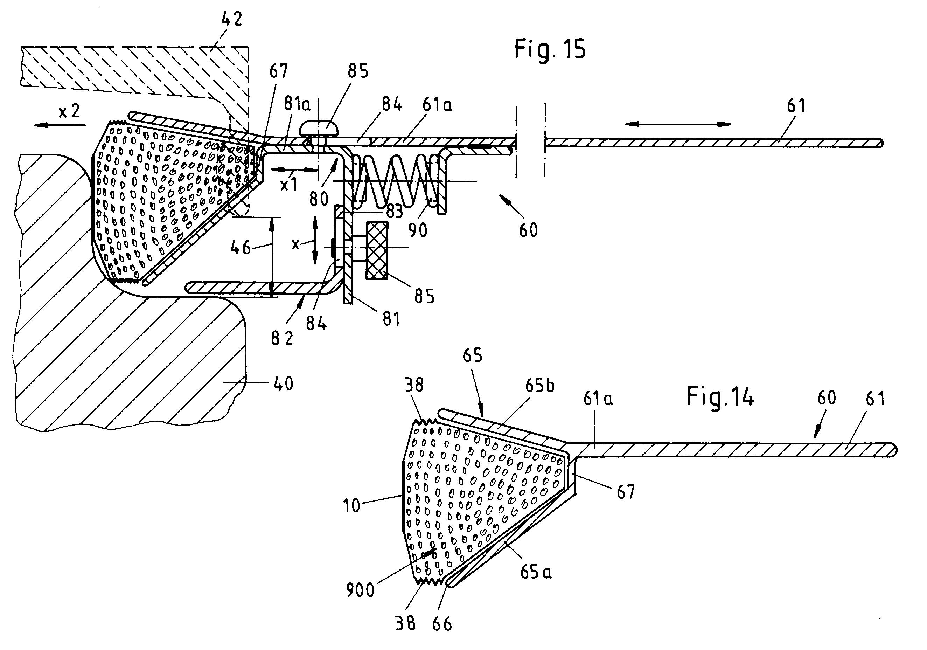

Das Anbringen eines Schaumstoffstreifens 100,200,300,400 und 900 im Spalt zwischen zwei Karosserieteilen eines Fahrzeuges, z.B. im Spalt eines feststehenden Karosserieteiles 40 und der Tür 42, erfolgt mittels eines Applikators 60, der gemäß Fig. 14 und 15 aus einer stabförmigen Handhabe 61 und einer an dem einen Ende 61a der Handhabe 61 angeformten klauenförmigen Halterung 65, die zwei die Klaue bildenden Schenkel 65a,65b aufweist, besteht, die so profiliert und ausgebildet sind, daß ein Schaumstoffstreifen in die Klauenöffnung 66 einschiebbar ist und von den beiden Klauenschenkeln 65a,65b erfaßt und gehalten wird, wobei die Länge der beiden Klauenschenkel 65a,65b derart bemessen ist, daß die Klebeschicht 10 freiliegend ist und an der der Handhabe 61 des Applikators 60 abgekehrten Seite des Schaumstoffstreifens zu liegen kommt (Fig.14). Der von den Klauenschenkeln 65a, 65b begrenzte Raum entspricht dem Querschnittsprofil des Schaumstoffstreifens. Eine symmetrische Ausbildung der beiden Klauenschenkel 65a,65b ermöglicht das Erfassen von Schaumstoffstreifen 100,200,300,400 mit einem symmetrischen Profil, wohingegen eine asymmetrische Ausbildung der Klauenschenkel 65a,65b für Schaumstoffstreifen 900 mit einem asymmetrischen Profil geeignet ist (Fig. 14 und 15).

Wie Fig. 14 und 15 zeigen, stehen die beiden Klauenschenkel 65a,65b der Halterung 65 des Applikators 60 in einem Winkel zueinander, so daß beide Klauenschenkel 65a,65b der Winkelstellung der beiden Längsseitenwände 36 des Schaumstoffstreifens 900 entsprechen (Fig.10), wobei beide Klauenschenkel 65a,65b über einen Steg 67 verbunden sind, dessen Länge der Länge der Seitenwand 36' des Schaumstoffstreifens 900 entspricht, die der die Klebeschicht 10 tragenden Seitenwand 36'' gegenüberliegt (Fig.10), so daß die Halterung 65 den Schaumstoffstreifen 900 im Bereich seiner Längsseitenwände 36 und der Seitenwand 36' ergreift. Der Schaumstoffstreifen 900 ist so sicher in der Halterung 65 gehalten und kann mühelos in den Spalt 46 zwischen den beiden Karosserieteilen 40,42 eingeführt und befestigt werden (Fig.15).

Der Applikator 60 besteht aus Kunststoff, Metall (Blech) oder einem anderen geeigneten Werkstoff. Mit diesem Applikator 760 ist es möglich, die Kunststoffstreifen 100,200,300,400 und 900 beim Aufbringen in die jeweils spezielle Fugenbreite zwischen der Tür 42 und der Karosserie 40 eines Fahrzeuges gut und mühelos einzuarbeiten. Es ist nämlich wünschenswert, die Tür 42 mit ihrer scharfen Türkante in der vollen Rundung mit Lack zu beschichten, weil besonders diese Kante beschädigungsanfällig ist.

Der in Fig.15 dargestellte Applikator 60 ist so ausgebildet, daß eine Verstellbarkeit je nach der Breite des Spaltes 46 möglich ist. Hierzu ist an der Handhabe 61 ein erstes Winkelprofil 80 mit einem senkrecht zur Handhabe 61 stehenden Schenkel 81 an dem ein zweites Winkelprofil 82 mittels einer Stellschraube 85 gehalten ist. Dieser Schenkel 83 des zweiten Winkelprofils 82 ist mit einem Langloch 84 versehen, in dem die Feststellschraube 85 so gehalten ist, daß im gelösten Zustand der Stellschraube 85 das Winkelprofil 82 in Pfeilrichtung X verschieblich ist, so daß eine Anpassung an die Breite des Spaltes 46 möglich ist (Fig.15).

Mittels der Feststellschraube 85 ist das Winkelprofil 82 in jeder Stellung arretierbar. Des weiteren ist das Winkelprofil 80 mit seinem Schenkel 81a an der Handhabe 61 in Pfeilrichtung X1 verschieblich angeordnet, wobei das freie Ende des Schenkels 81 des Winkelprofils 80 unter Ausbildung des stegartigen Abschnittes 67 in den Klauenschenkel 65a übergeht (Fig.15), so daß die Möglichkeit besteht, die Klauenöffnung 66 der Handhabe 61 des Applikators 60 verändern und dem Profil des jeweils verwendeten Schaumstoffstreifens 900 anpassen zu können. Vorteilhafterweise steht das Winkelprofil 80 unter der Einwirkung einer Feder 90, vermittels der bei der Handhabung des Applikators 60 der Schaumstoffstreifen 900 in Pfeilrichtung X2 mit seiner Klebeschicht 10 gegen den Karosserieteil 40 gedrückt wird, wenn der Schaumstoffstreifen 900 in dem Spalt 46 angebracht wird (Fig.15).

Der in Fig. 14 und 15 dargestellte Applikator 60 ist bei einer entsprechenden Ausgestaltung für symmetrische Schaumstoffstreifen 100,200,300,400 entsprechend dem Applikator für asymmetrische Schaumstoffstreifen 900 einsetzbar.

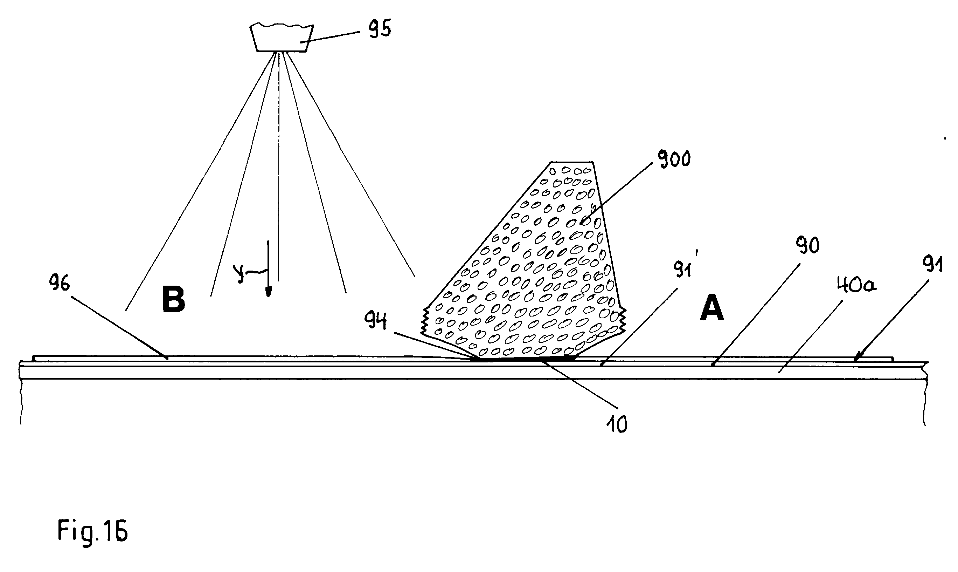

Fig. 16 zeigt die Anwendung eines Schaumstoffstreifens 900 bei einer "Bei"-Lackierung. Mit 40a ist ein Karosserieblech mit einer alten Lackschicht 90 bezeichnet. Der nicht neu zu lackierende Abschnitt A ist mit einem Papier- oder Folienabschnitt 91 abgedeckt. Zur Abgrenzung zum neu zu lackierenden Abschnitt B ist ein Schaumstoffstreifen 900 mit seiner Klebeschicht 10 aufgeklebt. Mittels einer Lackierpistole, die bei 95 angedeutet ist, wird Lack in Pfeilrichtung Y auf den neu zu lackierenden Abschnitt B aufgesprüht. Die neue Reparatur-Lackschicht 96 ist bei 94 langsam auslaufend und geht in die alte Lackschicht 91' über.

## Patentansprüche

1. Schaumstoffstreifen (100,200,300,400), dessen Oberfläche teilweise mit einer Klebeschicht (10) versehen ist,
dadurch gekennzeichnet,
daß der Schaumstoffstreifen (100,200,300,400) einen Querschnitt aufweist, der sich nacheinander aus folgendem zusammensetzt,
einem ersten, insbesondere gleichschenkligen Trapez (12) mit einer ersten Höhe (14) und einer ersten langen und einer ersten kurzen Grundlinie (16,18),
einem Rechteck (20) mit langen und kurzen Seiten (22,24,26), wobei eine erste lange Seite des Rechteckes (22) bündig mit der ersten langen Grundlinie (16) des ersten Trapezes (12) abschließt, und
einem zweiten, insbesondere gleichschenkligen Trapez (28) mit einer zweiten Höhe (30) und einer zweiten langen und einer zweiten kurzen Grundlinie (32,34),
wobei die zweite lange Grundlinie (32) des zweiten Trapezes (28) bündig mit einer zweiten langen Seite (24) des Rechteckes abschließt.

2. Schaumstoffstreifen (100,200,300,400) nach Anspruch 1,
dadurch gekennzeichnet,
daß die erste Höhe (14) kleiner oder gleich der zweiten Höhe (30) ist.

3. Schaumstoffstreifen (100,200,300,400) nach Anspruch 1 oder 2,
dadurch gekennzeichnet,
daß die erste Höhe (14) 1,15mm bis 2mm, insbesondere 1,5mm oder 2mm beträgt.

4. Schaumstoffstreifen (100,200,300,400) nach einem der Ansprüche 1 bis 3,
dadurch gekennzeichnet,
daß die zweite Höhe (30) 10,5mm bis 20mm, insbesondere 10,5mm oder 13mm, beträgt.

5. Schaumstoffstreifen (100,200,300,400) nach einem der Ansprüche 1 bis 4,
dadurch gekennzeichnet,
daß die Länge der kurzen Seiten (26) des Rechteckes (20) 1mm bis 5mm, insbesondere 2mm, beträgt.

6. Schaumstoffstreifen (100,200,300,400) nach einem der Ansprüche 1 bis 5,
dadurch gekennzeichnet,
daß die Länge der ersten kurzen Grundlinie (18) 1mm bis 10mm, insbesondere 6mm, beträgt.

7. Schaumstoffstreifen (100,200,300,400) nach einem der Ansprüche 1 bis 6,
dadurch gekennzeichnet,
daß die Länge der ersten langen Grundlinie (16) 2mm bis 20mm, insbesondere 17mm, 14mm oder 28mm, beträgt.

8. Schaumstoffstreifen (100,200,300,400) nach einem der Ansprüche 1 bis 7,
dadurch gekennzeichnet,
daß die Länge der zweiten kurzen Grundlinie (34) 1mm bis 5mm, insbesondere 3mm, beträgt.

9. Schaumstoffstreifen (100,200,300,400) nach einem der Ansprüche 1 bis 8,
dadurch gekennzeichnet,
daß das Verhältnis von erster Höhe (14) zu zweiter Höhe (30) 0,1 bis 0,5, insbesondere 0,11 oder 0,12 beträgt.

10. Schaumstoffstreifen (100,200,300,400) nach einem der Ansprüche 1 bis 9,
dadurch gekennzeichnet,
daß die Klebeschicht (10) die erste kurze Grundlinie (18) vollständig sowie auch teilweise oder ganz die seitlichen Flächen (36) bedeckt.

11. Schaumstoffstreifen (300,400) nach einem der Ansprüche 1 bis 10,
dadurch gekennzeichnet,
daß die zweite kurze Grundlinie (34) eine gekrümmte Form aufweist, insbesondere abgerundet ist.

12. Schaumstoffstreifen (300,400) nach einem der Ansprüche 1 bis 11,
dadurch gekennzeichnet,
daß nichtparallele Seiten (36) des ersten und/oder zweiten Trapezes (12,28) eine gekrümmte Form aufweisen.

13. Schaumstoffstreifen (330,400) nach einem der Ansprüche 1 bis 12,
dadurch gekennzeichnet,
daß der Übergang von den kurzen Seiten (26) des Rechteckes (20) in jeweilige nichtparallele Seiten (36) des zweiten Trapezes (28) jeweils in einer stetigen abgerundeten Kurve verläuft.

14. Schaumstoffstreifen (330,400) nach einem der Ansprüche 1 bis 13,
dadurch gekennzeichnet,
daß der Übergang von den kurzen Seiten (26) des Rechteckes (20) in jeweilige nichtparallele Seiten (36) des ersten Trapezes (12) jeweils in einer stetigen abgerundeten Kurve verläuft.

15. Verwendung des Schaumstoffstreifens, der nach einem der Ansprüche 1 bis 14 ausgebildet ist, zur Spaltabdichtung bzw. als Abdichtungselement, insbesondere zur Abdichtung von Spalten bzw. Fugen zwischen einem feststehenden Karosserieteil und einem beweglichen Karosserieteil von Kraftfahrzeugen.

16. Anordnung von Schaumstoffstreifen (500,600,700,800), die nach einem der Ansprüche 1 bis 14, ausgebildet sind,
dadurch gekennzeichnet,
daß wenigstens zwei Schaumstoffstreifen derart zueinander ausgerichtet sind, daß jeweils zwei kurze Seiten (26) der Rechtecke (20) der jeweiligen Schaumstoffstreifen (100,200,300,400) zueinander fluchtend ausgerichtet sind, wobei die Schaumstoffstreifen an diesen Stoßstellen über eine Sollreißbrücke (38) miteinander zu einer Kette verbunden sind.

17. Applikator zum Anbringen eines nach einem der Ansprüche 1 bis 14 ausgebildeten Schaumstoffstreifens in dem Spalt (46) zwischen zwei Karosserieteilen (40,42) eines Fahrzeuges, insbesondere zwischen einem feststehenden Karosserieteil (40) und einem beweglichen Karosserieteil, wie Tür (42),
dadurch gekennzeichnet,
daß der Applikator (60) aus einer stabartigen Handhabe (61) mit an ihrem einen Ende (61a) ausgebildeter klauenförmiger Halterung (65) zum Erfassen und Aufnehmen des Schaumstoffstreifens besteht, wobei die Halterung (65) von zwei sich zu ihren freien Enden öffnenden Klauenschenkeln (65a,65b) gebildet wird und wobei der von den Klauenschenkeln (65a,65b) begrenzte Raum dem Querschnittsprofil des symmetrischen Schaumstoffstreifens (100;200;300;400) oder dem Querschnittsprofil des asymmetrischen Schaumstoffstreifens (900) entspricht.

18. Applikator nach Anspruch 17,
dadurch gekennzeichnet,
daß die Winkelstellung der beiden Klauenschenkel (65a,65b) zueinander und ihre Längen so bemessen sind, daß ein eingesetzter Schaumstoffstreifen (100;200;300;400);900) unter Auslassung der Klebeschicht (10) allseitig umgriffen wird.

19. Applikator nach einem der Ansprüche 17 und 18,
dadurch gekennzeichnet,
daß die Handhabe (61) des Applikators (60) einen auf die Breite des Spaltes (46) zwischen den beiden Karosserieteilen (40,42) einstellbaren Abstandshalter (80,82) aufweist.

20. Applikator nach einem der Ansprüche 17 bis 19,
dadurch gekennzeichnet,
daß der Abstandshalter (80,82) einstückig mit einem (65a) der beiden Klauenschenkel (65a,65b) der Halterung (65) verbunden ist und an der Handhabe (61) längenverschieblich unter der Einwirkung einer Druckfeder (90) angeordnet ist.
